# EUROPÄISCHE PATENTSCHRIFT

(11) **EP 2 226 224 B1**
(45) Veröffentlichungstag und Bekanntmachung des Hinweises auf die Patenterteilung: **30.03.2016**
(21) Anmeldenummer: 10000056.1
(22) Anmeldetag: 07.01.2010
(51) Int. Cl.: B60T 13/26, B60T 17/02, B01D 53/26, F04B 17/05, F04B 49/02

(54) **Verfahren zum Betreiben einer Druckluftversorgungseinrichtung für ein Fahrzeug mit einem turbogeladenen Druckluftkompressor**
Method for operating a pressurised air supply device for a vehicle with a turbocharged compressed air compressor
Procédé de fonctionnement d'un dispositif d'alimentation en air comprimé pour un véhicule doté d'un compresseur d'air comprimé pressurisé

(30) Priorität: 08.01.2009 DE 102009004022
(43) Veröffentlichungstag der Anmeldung: 08.09.2010
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- WO-A1-02/12042
- WO-A2-2006/093569

## Beschreibung

Die Erfindung betrifft ein Verfahren zum Betreiben einer einen turbogeladenen Druckluftkompressor umfassenden Druckluftversorgungseinrichtung für ein Fahrzeug, insbesondere ein Nutzfahrzeug.

Die Erfindung betrifft weiterhin eine Druckluftversorgungseinrichtung für ein Fahrzeug, insbesondere ein Nutzfahrzeug, die zum Ausführen des erfindungsgemäßen Verfahrens ausgelegt ist.

Dokument WO 2006/093569 offenbart ein Verfahren laut Oberbegriff des Anspruchs 1 und eine Druckluftversorgungseinrichtung für ein Fahrzeug, die zum Ausführen eines solchen Verfahrens ausgelegt ist.

Um Gewicht und damit Betriebskosten bei einem Fahrzeug mit Druckluftverbrauchern, zum Beispiel einer druckluftbetriebenen Betriebsbremse, einsparen zu können, besteht die Möglichkeit, an sich notwendige Druckluftvorratsbehälter für ein geringeres Fassungsvermögen auszulegen. Um jedoch die Betriebssicherheit des Fahrzeugs weiterhin in allen denkbaren Situationen gewährleisten zu können, muss dann ein ausreichender Förderstrom aus aufbereiteter Druckluft kontinuierlich nachgeliefert werden. Um diese Fördermenge liefern zu können, kann entweder ein in dem Fahrzeug angeordneter Druckluftkompressor entsprechend groß dimensioniert werden, was dem Wunsch nach Gewichts- und Bauraumeinsparung widerspricht, oder ein kleinerer Druckluftkompressor kann zur Erhöhung seiner Förderleistung mit einem gegenüber dem Umgebungsdruck erhöhten Ladedruck beaufschlagt werden.

Da ein Antrieb eines Fahrzeugs, zum Beispiel eines Nutzfahrzeugs in Form eines Lastkraftwagens, aus Effizienzgründen häufig über einen Turbolader zur Steigerung des Wirkungsgrades des eingesetzten Verbrennungsmotors verfügt, kann ein gegenüber dem Normaldruck erhöhter Ladedruck in einfacher Weise über einen Abzweig zwischen dem Turbolader und dem Verbrennungsmotor bereitgestellt werden. Durch den erhöhten Ladedruck steigt das von dem aufgeladenen Druckluftkompressor geförderte Luftvolumen stark an, so dass der Druckluftkompressor selbst entsprechend klein ausgelegt sein kann. Nachteilig bei diesem System sind jedoch die weit reichenden Folgen eines Ladedruckabfalls, insbesondere nach einem Ausfall des Turboladers, da Druckluft nicht mehr in ausreichender Menge erzeugt werden kann.

Der vorliegenden Erfindung liegt daher die Aufgabe zugrunde, ein Verfahren zum Betreiben eines Systems mit einem turboaufgeladenen Kompressor bereitzustellen, bei dem diese Probleme zumindest abgemildert sind.

Diese Aufgabe wird erfindungsgemäß dadurch gelöst, dass ein Ladedruck eines den Druckluftkompressor mit Ladeluft versorgenden Turboladers überwacht wird, und dass ein Regenerationszyklus bei Abfall des Ladedrucks an eine Förderleistung des Druckluftkompressors angepasst wird. Auf diese Weise können die Abstände zwischen zwei Regenerationszyklen an die geförderte Luftmenge angepasst werden, wodurch die zur Druckluftförderung zur Verfügung stehende Zeitspanne vergrößert wird. Dies erlaubt die durch den Ladedruckabfall reduzierte Förderleistung des Kompressors zumindest teilweise auszugleichen.

Nützlicherweise kann dabei vorgesehen sein, dass die Anpassung des Regenerationszyklus durch einen Zeitschalterbetrieb erfolgt. Die Verwendung eines Zeitschalterbetriebes zur Steuerung der Regenerationszyklen nach einem Abfall des Ladedrucks ist eine zuverlässige Lösung, die auf einem einfach zu realisierenden und robusten Prinzip basiert.

Vorzugsweise kann vorgesehen sein, dass eine zum Erreichen eines Abschaltdruckes des Druckluftkompressors notwendige Zeitspanne überwacht wird. Durch die Überwachung der notwendigen Zeitspanne T zum Erreichen des Abschaltdrucks des Druckluftkompressors kann abgeschätzt werden, ob der Rückgang der Förderleistung des Kompressors kritisch ist oder noch toleriert werden kann.

Besonders bevorzugt ist, dass der Ladedruck für den Druckluftkompressor erhöht wird, wenn die Zeitspanne T bis zum Erreichen des Abschaltdrucks des Druckluftkompressors größer als eine vorgebbare Schwelle Tₘₐₓ wird. Da moderne Fahrzeuge oft über eine Möglichkeit verfügen, den von einem Turbolader bereitgestellten Ladedruck innerhalb gewisser Grenzen zu variieren, kann auf diese Weise versucht werden, dem Abfall des Ladedrucks entgegenzuwirken.

Vorteilhafterweise kann vorgesehen sein, dass eine Versorgung einzelner oder aller nicht sicherheitsrelevanter Druckluftverbraucher eingeschränkt wird, wenn der Ladedruck für den Druckluftkompressor nicht in ausreichendem Maße erhöht werden kann, um den Abschaltdruck des Druckluftkompressors innerhalb der Zeitspanne T<Tₘₐₓ zu erreichen. Kann der Druckluftbedarf nicht mehr gedeckt werden, so kann zunächst über eine zwangsweise Reduzierung des Druckluftverbrauchs durch nicht sicherheitsrelevante Druckluftverbraucher, zum Beispiel durch Einschränkung oder Einstellung der Versorgung von Druckluftverbrauchern, ein Stabilisierungsversuch unternommen werden.

Weiterhin kann vorgesehen sein, dass ein notwendiger Regenerationszyklus nicht zum vorgesehenen Zeitpunkt durchgeführt wird, wenn ein Druckniveau sicherheitsrelevanter Druckluftverbraucher nicht nach unten stabilisiert werden kann, um eine Betriebssicherheit des Fahrzeugs kurzfristig sicherzustellen. Sollten trotz aller bisher beschriebenen Maßnahmen die Sicherheitsrelevanten Verbraucher insbesondere die Betriebsbremsen, in nicht ausreichendem Maße mit Druckluft versorgt werden können, so kann durch Verzögern oder Überspringen eines Regenerationszyklus versucht werden, eine Stabilisierung des Druckniveaus zu erreichen.

Insbesondere kann vorgesehen sein, dass ein Warnsignal ausgegeben wird, wenn das Druckriiveau sicherheitsrelevanter Druckluftverbraucher nicht nach unten stabilisiert werden kann. Auf diese Weise kann beispielsweise der Fahrer des Fahrzeugs von dem drohenden Ausfall der Druckluftversorgung informiert werden. Insbesondere kann auf diese Weise der Fahrer dazu angehalten werden, das Fahrzeug anzuhalten und zu sichern, bevor ein Ausfall der Betriebsbremsen zu befürchten und ein Einbremsen über die Feststellbremsen notwendig wäre.

Die vorliegende Erfindung wird nun mit Bezug auf die begleitenden Zeichnungen anhand einer bevorzugten Ausführungsform beispielhaft erläutert.

Es zeigen:
- Figur 1: eine Druckluftversorgungseinrichtung mit angeschlossenen Verbrauchern und
- Figur 2: ein Flussdiagramm zur Veranschaulichung des erfindungsgemäßen Verfahrens.

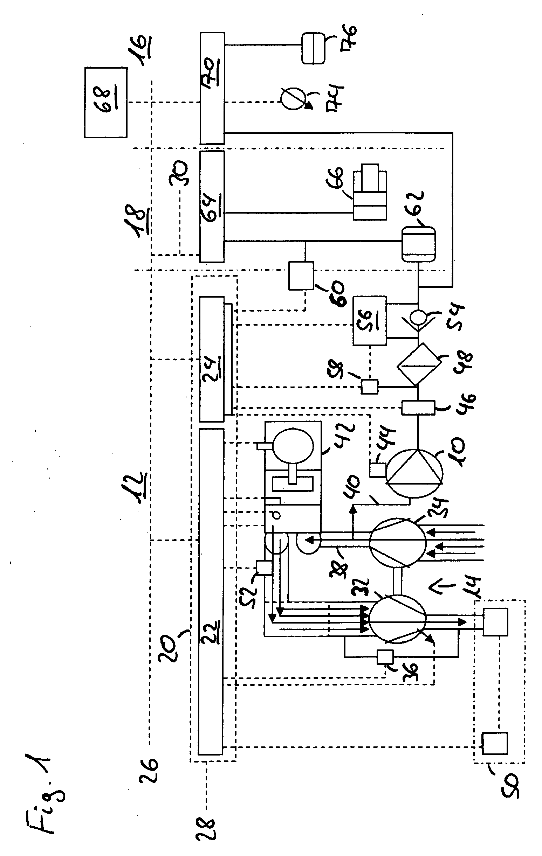

Figur 1 zeigt eine Druckluftversorgungseinrichtung mit angeschlossenen Verbrauchern. Die dargestellte Druckluftversorgungseinrichtung 12 umfasst einen von einem Antriebsmotor 42 angetriebenen Druckluftkompressor 10, der Druckluft in an sich üblicher Weise für einen sicherheitsrelevanten Druckluftverbraucher 18 und einen nicht sicherheitsrelevanten Druckluftverbraucher 16 bereitstellt. Als sicherheitsrelevanter Druckluftverbraucher 18 ist dabei beispielhaft ein EBS-System 64 mit einem Bremszylinder 66 und einem Druckluftbehälter 62 dargestellt, während als nicht sicherheitsrelevanter Druckluftverbraucher 16 beispielhaft ein Luftfedersystem 70 mit einem Höhensensor 74 und einer Luftfeder 76 dargestellt ist. Die Druckluftversorgungseinrichtung 12 sowie die Druckluftverbraucher 16, 18 und ein zentrales Steuergerät 68 des Fahrzeugs sind beispielhaft über einen CAN-Bus 26 miteinander gekoppelt.

Der den Kompressor 10 antreibende Antriebsmotor 42 des Fahrzeugs verfügt über eine Motorsteuerung 22 als Teil einer Steuereinheit 20, die ebenfalls eine Kompressor- und Trocknersteuerung 24 umfasst. Der Antriebsmotor 42 wird über eine Ladeluftführung 38 mit Frischluft versorgt, die wiederum von einem eine Abgasturbine 32 und einen Verdichter 34 umfassenden Turbolader 14 mit Frischluft beschickt wird. Im Abgasstrom des Antriebsmotors 42 ist ein Sensor 52 angeordnet, der beispielsweise in Zusammenhang mit einer Luftmassenregelung oder einer Abgasnachbehandlung verschiedene Daten erfassen kann. Abströmseitig ist hinter der Abgasturbine 32 ein optionales Abgasnachbehandlungssystem 50 dargestellt. Parallel zu der Abgasturbine 32 ist ein Bypassventil 36 vorgesehen, welches die Leistung des Turboladers 14 beschränken kann. Sowohl die Abgasturbine 32 als auch der Verdichter 34 können beispielsweise über eine verstellbare Schaufelgeometrie verfügen, um die Leistung des Turboladers 14 flexibel anpassen zu können. Zwischen dem Verdichter 34 und dem Antriebsmotor 42 ist ein Abzweig 40 von der Ladeluftführung 38 vorgesehen, der einen Teil der von dem Verdichter 34 verdichteten Luft zu dem Druckluftkompressor 10 führt. Die von dem Druckluftkompressor 10 verdichtete Luft wird in üblicher Weise von der Druckluftversorgungseinrichtung 12 aufbereitet und an die exemplarisch dargestellten Druckluftverbraucher 16, 18 weitergeleitet. Zu diesem Zweck verfügt der Druckluftkompressor 10 über einen Kompressorsteuereingang 44, über den der Druckluftkompressor 10 zwischen einer Förderphase und einer Entlastungsphase umschaltbar ist. Weiterhin umfasst die Druckluftversorgungseinrichtung 12 ein Absperrventil 46, eine Lufttrocknerpatrone 48, ein Rückschlagventil 54, ein Regenerationsventil 56, ein Ablassventil 58 und einen Drucksensor 60. Sämtliche Funktionen der Druckluftversorgungseinrichtung 12 werden über die Kompressor- und Trocknersteuerung 24 der Steuereinheit 20 gesteuert beziehungsweise geregelt. Über ein Gaspedal 28 und ein Bremspedal 30 können Fahrerwünsche erfasst und umgesetzt werden. Exemplarisch ist dabei das Gaspedal 28 direkt mit der Steuereinheit 20 gekoppelt, während das Bremspedal 30 über den CAN-Bus 26 indirekt mit dem EBS-System 64 gekoppelt ist.

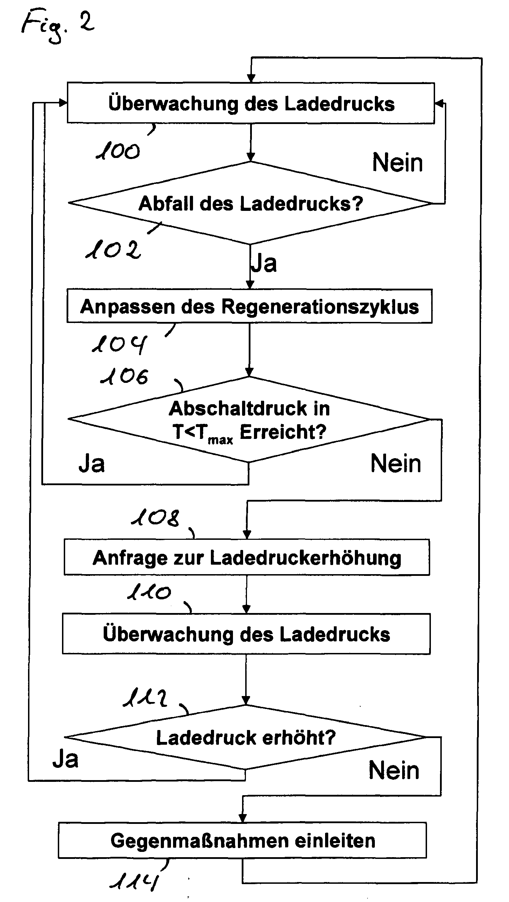

Figur 2 zeigt ein Flussdiagramm zur Veranschaulichung des erfindungsgemäßen Verfahrens. Ausgehend von Schritt 100, bei dem der bereitgestellte Ladedruck überwacht wird, wird in Schritt 102 überprüft, ob ein Abfall des Ladedrucks stattgefunden hat. Falls nicht, Schritt 102-nein, wird bei Schritt 100 fortgefahren. Falls ein Abfall des Ladedrucks festgestellt wurde, Schritt 102-ja, wird in Schritt 104 der Regenerationszyklus angepasst. Dies kann beispielsweise durch Verlängerung der zeitlichen Abstände zwischen zwei Regenerationszyklen erfolgen, da das von dem Druckluftkompressor aufgrund des gesunkenen Ladedrucks geförderte Luftvolumen stark abgenommen hat und die Lufttrocknerpatrone deshalb eine geringere Menge an Feuchtigkeit pro Zeiteinheit aufnehmen muss. Es ist denkbar, dass die Steuerung des Regenerationszyklus im Defektfall, das heißt bei Abfall des Ladedrucks, durch einen Zeitschalterbetrieb geregelt wird. Anschließend wird in Schritt 106 überwacht, ob der Druckluftkompressor noch innerhalb eines einstellbaren Zeitintervalls Tₘₐₓ seinen Abschaltdruck erreicht. Es wird also überprüft, ob das Druckniveau in der Druckluftversorgungseinrichtung innerhalb eines einstellbaren Zeitintervalls Tₘₐₓ soweit ansteigt, dass der Druckluftkompressor in üblicher Weise über seinen Kompressorsteuereingang entlastet, das heißt aus einer Förderphase in eine Entlastungsphase, geschaltet wird. Falls ja, Schritt 106-ja, wird bei Schritt 100 fortgefahren.

Falls nein, Schritt 106-nein, wird in Schritt 108 zunächst versucht, den Ladedruck zu erhöhen. Dies kann beispielsweise durch Veränderung der Schaufelgeometrie des Verdichters beziehungsweise der Abgasturbine oder durch Schließen des Bypassventils erreicht werden. Ob diese Maßnahme den gewünschten Erfolg bringt, wird in Schritt 110 durch eine erneute Überwachung des Ladedrucks festgestellt. Ist der Ladedruck wieder erhöht, Schritt 112-ja, so wird bei Schritt 100 fortgefahren. Ist eine Ladedruckerhöhung nicht erfolgt, Schritt 112-nein, so werden in Schritt 114 entsprechende Gegenmaßnahmen eingeleitet. Diese Gegenmaßnahmen sollen insbesondere die Betriebssicherheit des Fahrzeugs sicherstellen und können insbesondere das zwangsweise Senken des Druckluftverbrauchs umfassen. Dies kann beispielsweise durch Einstellen oder Einschränken der Versorgung nicht sicherheitsrelevanter Druckluftverbraucher, zum Beispiel der Luftfederung, erfolgen. Die Versorgung einzelner Druckluftverbraucher wird also ganz allgemein nach einer vorgebbaren Priorität erfolgen, wobei insbesondere die Betriebsbremse und der Triebstrang mit der Kupplung eine höhere Versorgunspriorität genießen als beispielsweise eine Luftfederung.

Auf Grund des reduzierten Luftfördervolumens des Druckluftkompressors nach dem Abfall des Ladedrucks ist möglicherweise das Druckniveau sicherheitsrelevanter Verbraucher, zum Beispiel der Betriebsbremse, nicht gewährbar. Dies kann beispielsweise über entsprechende Drucksensoren festgestellt werden, die über einen längeren Zeitraum auch eine eventuell schleichende Druckverminderung, beispielsweise durch eine nicht ausreichende Druckluftförderung während einer Förderphase, feststellen können. Sollte dies der Fall sein beziehungsweise der Abschaltdruck des Druckluftkompressors nicht innerhalb eines Zeitintervalls T<Tₘₐₓ erreicht werden, könnten auch einzelne Regenerationszyklen übersprungen werden beziehungsweise die zeitlichen Abstände zwischen zwei Regenerationszyklen über das eigentlich zulässige Maß hinaus ausgedehnt werden. Dies geschieht, um die Betriebssicherheit des Fahrzeugs in Form eines ausreichenden Druckniveaus der sicherheitsrelevanten Verbraucher, beispielsweise der Betriebsbremsen, kurzfristig sicherstellen zu können. Dabei wird billigend in Kauf genommen, dass eventuell auf Grund einer überlasteten Lufttrocknerpatrone Feuchtigkeit in die Druckluftverbraucher eintreten könnte. Durch ein Warnsignal beziehungsweise eine Fehlermeldung, beispielsweise in Form einer einfachen Signallampe im Fahrerhaus, kann der Fahrer hierüber in Kenntnis gesetzt werden und das Fahrzeug schnellstmöglich sicher zum Stillstand bringen. Weiterhin kann auf Grund dieses Warnsignals eine anschließende Trocknung des Druckluftsystems des Fahrzeugs als zusätzliche Wartungsarbeit anstehen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftkompressor
- 12: Druckluftversorgungseinrichtung
- 14: Turbolader
- 16: nicht sicherheitsrelevanter Druckluftverbraucher
- 18: sicherheitsrelevanter Druckluftverbraucher
- 20: Steuereinheit
- 22: Motorsteuerung
- 24: Kompressor- und Trocknersteuerung
- 26: CAN-Bus
- 28: Gaspedal
- 30: Bremspedal
- 32: Abgasturbine
- 34: Verdichter
- 36: Bypassventil
- 38: Ladeluftführung
- 40: Abzweig
- 42: Antriebsmotor
- 44: Kompressorsteuereingang
- 46: Absperrventil
- 48: Lufttrocknerpatrone
- 50: Abgasnachbehandlungssystem
- 52: Sensor
- 54: Rückschlagventil
- 56: Regenerationsventil
- 58: Ablassventil
- 60: Drucksensor
- 62: Druckluftbehälter
- 64: EBS-System
- 66: Bremszylinder
- 68: Steuergerät
- 70: Luftfedersystem
- 74: Höhensensor
- 76: Luftfeder
- 100: Überwachung des Ladedrucks
- 102: Abfall des Ladedrucks?
- 104: Anpassen des Regenerationszyklus
- 106: Abschaltdruck in T<Tₘₐₓ erreicht?
- 108: Anfrage zur Ladedruckerhöhung
- 110: Überwachung des Ladedrucks
- 112: Ladedruck erhöht?
- 114: Gegenmaßnahmen einleiten

## Patentansprüche

1. Verfahren zum Betreiben einer einen turbogeladenen Druckluftkompressor (10) umfassenden Druckluftversorgungseinrichtung (12) für ein Fahrzeug, insbesondere ein Nutzfahrzeug, **dadurch gekennzeichnet,**
- **dass** ein Ladedruck eines den Druckluftkompressor (10) mit Ladeluft versorgenden Turboladers (14) überwacht wird, und
- **dass** ein Regenerationszyklus bei Abfall des Ladedrucks an eine Förderleistung des Druckluftkompressors (10) angepasst wird.

2. Verfahren nach Anspruch 1, **dadurch gekennzeichnet, dass** die Anpassung des Regenerationszyklus durch einen Zeitschalterbetrieb erfolgt.

3. Verfahren nach Anspruch 1 oder 2, **dadurch gekennzeichnet, dass** eine zum Erreichen eines Abschaltdruckes des Druckluftkompressors (10) notwendige Zeitspanne T überwacht wird.

4. Verfahren nach Anspruch 3, **dadurch gekennzeichnet, dass** der Ladedruck für den Druckluftkompressor (10) erhöht wird, wenn die Zeitspanne T bis zum Erreichen des Abschaltdrucks des Druckluftkompressors (10) größer als eine vorgebbare Schwelle Tₘₐₓ wird.

5. Verfahren nach Anspruch 4, **dadurch gekennzeichnet, dass** eine Versorgung einzelner oder aller nicht sicherheitsrelevanter Druckluftverbraucher (16) eingeschränkt wird, wenn der Ladedruck für den Druckluftkompressor (10) nicht in ausreichendem Maße erhöht werden kann, um den Abschaltdruck des Druckluftkompressors (10) innerhalb der Zeitspanne T<Tₘₐₓ zu erreichen.

6. Verfahren nach einem der vorhergehenden Ansprüche, **dadurch gekennzeichnet, dass** ein notwendiger Regenerationszyklus nicht zum vorgesehenen Zeitpunkt durchgeführt wird, wenn ein Druckniveau sicherheitsrelevanter Druckluftverbraucher (18) nicht nach unten stabilisiert werden kann, um eine Betriebssicherheit des Fahrzeugs kurzfristig sicherzustellen.

7. Verfahren nach einem der vorhergehenden Ansprüche, **dadurch gekennzeichnet, dass** ein Warnsignal ausgegeben wird, wenn das Druckniveau sicherheitsrelevanter Druckluftverbraucher (18) nicht nach unten stabilisiert werden kann.

8. Druckluftversorgungseinrichtung (12) für ein Fahrzeug, insbesondere ein Nutzfahrzeug, die zum Ausführen eines erfindungsgemäßen Verfahrens nach einem der vorhergehenden Ansprüche ausgelegt ist.

## Claims

1. Method for operating a compressed air supply device (12) comprising a turbocharged air compressor for a vehicle, in particular a commercial vehicle, **characterised in that**
- a charging pressure of a turbocharger (14) supplying the air compressor (10) with charge air is monitored, and
- if the charging pressure drops, a regeneration cycle is adapted to an output of the air compressor (10).

2. Method according to claim 1, **characterised in that** the regeneration cycle is adapted by means of a timer operation.

3. Method according to claim 1 or 2, **characterised in that** a time period T required for reaching a switch-off pressure of the air compressor (10) is monitored.

4. Method according to claim 3, **characterised in that** the charging pressure for the air compressor (10) is increased if the time period T until the switch-off pressure of the air compressor (10) is reached exceeds a presettable threshold Tₘₐₓ.

5. Method according to claim 4, **characterised in that** a supply to individual compressed air users (16) or to all compressed air users (16) which are not safety-relevant is restricted if the charging pressure for the air compressor (10) cannot be increased sufficiently to reach the switch-off pressure of the air compressor (10) within the time T<Tₘₐₓ.

6. Method according to any of the preceding claims, **characterised in that** a necessary regeneration cycle is not run at the intended point in time if a pressure level of safety-relevant compressed air users (18) cannot be stabilised downwards for ensuring a short-term operational safety of the vehicle.

7. Method according to any of the preceding claims, **characterised in that** a warning signal is output if the pressure level of safety-relevant compressed air users (18) cannot be stabilised downwards.

8. Compressed air supply device (12) for a motor vehicle, in particular a commercial vehicle, which compressed air supply device (12) is designed for implementing a method according to the invention as claimed in any of the preceding claims.

## Revendications

1. Procédé pour faire fonctionner un dispositif (12) d'alimentation en air comprimé, comprenant un compresseur (10) d'air comprimé suralimenté pour un véhicule, notamment pour un véhicule utilitaire, **caractérisé**
- **en ce que** l'on contrôle une pression de suralimentation d'un turbocompresseur (14) alimentant le compresseur (10) d'air comprimé en air de suralimentation et
- **en ce que** l'on adapte un cycle de régénération, s'il se produit une diminution de la pression de suralimentation, à une puissance du compresseur (10) d'air comprimé.

2. Procédé suivant la revendication 1, **caractérisé en ce que** l'on effectue l'adaptation du cycle de régénération par un fonctionnement par interrupteur temporisé.

3. Procédé suivant la revendication 1 ou 2, **caractérisé en ce que** l'on contrôle un laps de temps T nécessaire pour obtenir une pression d'arrêt du compresseur (10) d'air comprimé.

4. Procédé suivant la revendication 3, **caractérisé en ce que** l'on augmente la pression de suralimentation pour le compresseur (10) d'air comprimé, si le laps de temps T, jusqu'à ce que la pression d'arrêt du compresseur (10) d'air comprimé soit atteinte, est plus grand qu'un seuil Tₘₐₓ pouvant être donné à l'avance.

5. Procédé suivant la revendication 4, **caractérisé en ce que** l'on restreint une alimentation de certains ou de tous les consommateurs (16) d'air comprimé qui ne sont pas pertinents pour la sécurité, si la pression de suralimentation pour le compresseur (10) d'air comprimé ne peut pas être augmentée dans une mesure suffisante pour atteindre la pression d'arrêt du compresseur (10) d'air comprimé dans le laps de temps T<Tₘₐₓ.

6. Procédé suivant l'une des revendications précédentes, **caractérisé en ce que** l'on n'effectue pas un cycle de régénération nécessaire à l'instant prévu, si un niveau de pression de consommateur (18) d'air comprimé pertinent pour la sécurité ne peut être stabilisé vers le bas afin d'assurer, dans un délai court, une sécurité de fonctionnement du véhicule.

7. Procédé suivant l'une des revendications précédentes, **caractérisé en ce que** l'on émet un signal d'alerte, si le niveau de pression de consommateur (18) d'air comprimé pertinent pour la sécurité ne peut pas être stabilisé vers le bas.

8. Dispositif (12) d'alimentation en air comprimé pour un véhicule, notamment pour un véhicule utilitaire, qui est conçu pour la mise en oeuvre d'un procédé suivant l'invention selon l'une des revendications précédentes.
